# EUROPÄISCHE PATENTSCHRIFT

(11) **EP 2 066 710 B1**
(45) Veröffentlichungstag und Bekanntmachung des Hinweises auf die Patenterteilung: **19.01.2011**
(21) Anmeldenummer: 07803314.9
(22) Anmeldetag: 07.09.2007
(51) Int. Cl.: C08G 2/08

(54) **IONISCHE FLÜSSIGKEITEN BEI DER POM-HERSTELLUNG**
IONIC LIQUIDS IN POM PREPARATION
LIQUIDES IONIQUES POUR LA FABRICATION DE POM

(30) Priorität: 12.09.2006 EP 06120507
(43) Veröffentlichungstag der Anmeldung: 10.06.2009
(73) Patentinhaber: BASF SE, 67056 Ludwigshafen (DE)
(72) Erfinder: SHARAVANAN, Karthikeyan, 68199 Mannheim (DE); WISSEL, Kathrin, 67056 Ludwigshafen (DE)
(86) Internationale Anmeldenummer: PCT/EP2007/059360
(87) Internationale Veröffentlichungsnummer: WO 2008/031760

(56) Entgegenhaltungen:
- WO-A-2006/007596
- GB-A- 1 426 299
- US-A- 2 994 687
- US-A- 4 355 153

## Beschreibung

Die Erfindung betrifft ein verbessertes Verfahren zur Herstellung von Polyoxymethylenen.

Es ist bekannt, dass Oxymethylenpolymere durch kontinuierliche Massepolymerisation der Monomeren in Gegenwart kationisch wirkender Initiatoren hergestellt werden können. Diese Polymerisation wird häufig in Knetern oder Extrudern durchgeführt. Dabei kann die Temperaturführung so erfolgen, dass das entstehende Oxymethylenpolymer entweder in fester Form (DE-A 1 161 421, DE-A 1 495 228, DE-A 1 720 358, DE-A 3 018 898) oder auch als Schmelze (DE-A 3 147 309) anfällt. Die Aufarbeitung des in fester Form anfallenden Polymers ist bekannt, siehe: DE-A 3 147 309, DE-A 3 628 561, EP-A 678 535, EP-A 699 965 und DE-A 4 423 617.

Bei der Massepolymerisation sind unterschiedliche Verfahrensvarianten Stand der Technik, darunter die Batch-Polymerisation in Schalen, die kontinuierliche Polymerisation in Kneter-Reaktoren bei Temperaturen unterhalb des Schmelzpunktes oder die Polymerisation bei Temperaturen oberhalb des Schmelzpunktes von Trioxan im Extruder (siehe WO 01/58974).

Die Herstellung mittels Suspensions- oder Fällungspolymerisation mit kationischen Initiatoren ist generell bekannt. In dem hierbei verwendeten Lösungsmittel soll insbesondere das entstehende Polymerisat nicht löslich sein, damit dieses leichter abtrennbar ist.

Sowohl bei Masse- als auch Fällungspolymerisation werden Initiatoren zugegeben, um die Polymerisation zu starten.

Typische kationische Initiatoren sind Brönstedt- oder Lewis-Säuren wie beispielsweise Perchlorsäure, Trifluormethansulfonsäure oder Bortrifluorid (Prog. Polym. Sci. Vol. 18, 1-84, 1993).

Heteropolysäuren als Initiatoren sind beispielsweise aus der WO 2006/045579 bekannt.

Aus der WO 20061007596, GB-A 14 26 299, US 4,355,153 und US 2, 994,687 sind Oniumionen für die anionische Polymerisation bekannt.

Aus dem Stand der Technik sind somit Verbindungen bekannt, welche alle einen Dampfdruck > 0 haben. Da die meisten Verfahren auch eine Aufarbeitung oder Rückgewinnung der Monomeren beinhalten, ist der Dampfdruck der Starter problematisch; die Monomere in den rückgeführten Stoffströmen können mit Starterresten verunreinigt sein. Deswegen werden diese Verfahrensteilaspekte durch die Anwesenheit der kationischen Verbindungen gestört. Das gleiche gilt für die Monomerdosierung vor der Polymerisation. Insofern ist es wünschenswert, die eingesetzten Mengen sehr gering zu halten.

Aufgabe der vorliegenden Erfindung war es daher, ein verbessertes Verfahren zur Verfügung zu stellen, welches folgende Vorteile gegenüber dem Stand der Technik aufweist:
der Initiator hat einen nicht messbaren Dampfdruck und stört damit die einzelnen Verfahrensstufen nicht,
Abbauprodukte des Initiators können als Formaldehydfänger (Abbauprodukt von POM bzw. entsteht bei der Stabilisierung der Kettenenden) wirken. Die eingesetzten Verbindungen können also eine Doppelfunktion erfüllen. Die Zugabe weiterer FA-Fänger kann reduziert, u.U. sogar vermieden werden,
die Starterverbindung kann als Reinstoff dosiert werden, auf ein Lösungsmittel kann verzichtet werden.

Demgemäß wurde ein Verfahren zur Herstellung von POM durch Polymerisation der Monomeren a) in Gegenwart kationisch wirkender Initiatoren b) sowie gegebenenfalls in Gegenwart von Reglern c) und anschließender Desaktivierung d) sowie Austragung aus dem Reaktor gefunden, welches dadurch gekennzeichnet ist, dass man als Initiator b) mindestens eine ionische Flüssigkeit der folgenden Formeln einsetzt oder deren Mischungen:

| | |
|---|---|
| 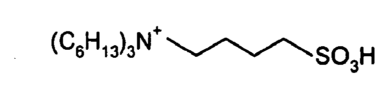 | CF₃SO₃- |
| 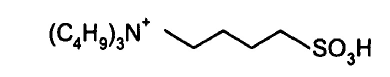 | CF₃SO₃- |
| 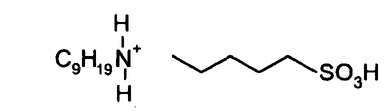 | CF₃SO₃- |
| 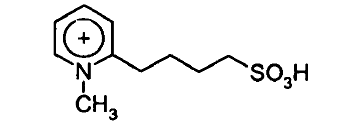 | CF₃SO₃- |
| 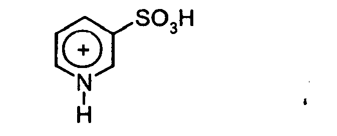 | CF₃SO₃- |
| 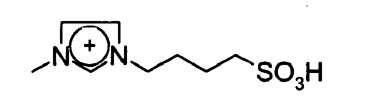 | CF₃SO₃- |

Bevorzugte Ausführungsformen sind den Unteransprüchen zu entnehmen.

Das Verfahren kann grundsätzlich auf jeglichen Reaktoren mit hoher Mischwirkung durchgeführt werden, wie beispielsweise Schalen, Pflugscharmischern, Rohrreaktoren, List-Reaktoren, Knetern, Rührreaktoren, Extrudern und Bandreaktoren.

Die entstehenden POM-Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im Allgemeinen durch die Polymerisation von Monomeren a) wie Formaldehyd oder Trioxan herstellt, vorzugsweise in der Gegenwart von geeigneten Katalysatoren.

Im Rahmen der Erfindung werden Polyoxymethylencopolymere bevorzugt, insbesondere solche, die neben den wiederkehrenden Einheiten -CH₂O- noch bis zu 50, vorzugsweise 0,1 bis 20, insbesondere 0,3 bis 10 mol-% und ganz besonders bevorzugt 2 bis 6 mol-% an wiederkehrenden Einheiten. 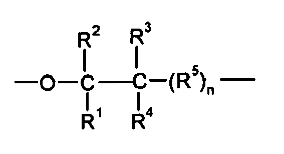 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O -, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen Ringöffnung von cyclischen Ethern in die Copolymere eingeführt werden. Bevorzugte cyclische Ether sind solche der Formel 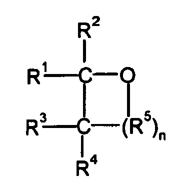 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 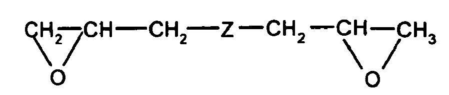 und/oder 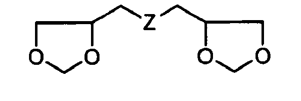 wobei Z eine chemische Bindung, -O-, -ORO- (R=C₁- bis C₈-Alkylen oder C₃- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Endgruppenstabilisierte Polyoxymethylenpolymerisate, die an den Kettenenden C-C-oder -O-CH₃-Bindungen aufweisen, werden besonders bevorzugt.

Die bevorzugten Polyoxymethylencopolymere haben Schmelzpunkte von mindestens 150 °C und Molekulargewichte (Gewichtsmittelwert) M_{w} im Bereich von 5.000 bis 300.000, vorzugsweise von 7.000 bis 250.000.

Insbesondere bevorzugt sind POM-Copolymerisate mit einer Uneinheitlichkeit (M_{w}/Mₙ) von 2 bis 15, bevorzugt von 3 bis 12, besonders bevorzugt von 4 bis 9. Die Messungen erfolgen in der Regel über (GPC) SEC (size exclusion chromatography), der Mₙ-Wert (Zahlenmittel des Molekulargewichtes) wird im allgemeinen bestimmt mittels (GPC) SEC (size exclusion chromatography).

Besonders bevorzugte POM-Copolymerisate weisen eine bimodale Molekulargewichtsverteilung auf, wobei der niedermolekulare Anteil ein Molgewicht von 500 bis 20.000, vorzugsweise von 1.000 bis 15.000 aufweist und in Flächenanteilen von 1 bis 15, vorzugsweise 8 bis 10 % beim Verteilungsgraphen w(log M) gegen log M vorhanden ist.

Bevorzugt weisen die gemäß dem erfindungsgemäßen Verfahren erhältlichen Roh-Polyoxymethylene einen Restformaldehydgehalt gemäß VDA 275 im Granulat von maximal 3 %, bevorzugt maximal 1 %, vorzugsweise maximal 0,05 % auf.

Die mittlere Teilchengröße (d₅₀-Wert) (Korngröße) der POM-Polymerisate beträgt bevorzugt von 0,5 bis 20 mm, vorzugsweise von 0,75 bis 15 mm und insbesondere von 1 bis 7 mm.

Unter einem d₅₀-Wert versteht der Fachmann in der Regel den Teilchengrößenwert, bei welchem 50 % der Teilchen eine kleinere Teilchengröße aufweisen und 50 % eine größere Teilchengröße aufweisen. Dies ist entsprechend für die angegebenen d₁₀ und d₉₀-Werte zu verstehen.

Der d₁₀-Wert ist vorzugsweise kleiner 1 mm, insbesondere 0,75 mm und ganz besonders bevorzugt kleiner 0,5 mm.

Bevorzugte d₉₀-Werte sind kleiner 30 mm und insbesondere kleiner 20 mm und ganz besonders bevorzugt kleiner 10 mm.

### Bestimmung der Korngrößenverteilung:

Die Korngrößenverteilung wurde anhand eines Standardsiebsatzes (Analysensiebe nach DIN 4188) in unterschiedliche Siebfraktionen aufgeteilt und diese ausgewogen. Beispielsweise dso = 1 mm bedeutet, dass 50 Gew.-% der Probe eine Teilchengröße kleiner gleich 1 mm aufweist.

Das erfindungsgemäße Verfahren wird bevorzugt für die Homo- und die Copolymerisation von Trioxan angewandt. Als Monomeres a) kann aber grundsätzlich jegliches vorstehend beschriebene Monomere, beispielsweise auch Tetroxan oder (Para)Formaldehyd eingesetzt werden.

Die Monomeren, beispielsweise Trioxan, werden bevorzugt im geschmolzenen Zustand zudosiert, im allgemeinen bei Temperaturen von 60 bis 120°C.

Vorzugsweise beträgt die Temperatur der Reaktionsmischung bei der Dosierung 62 bis 114°C, insbesondere 70 bis 90°C.

Die Molekulargewichte des Polymeren können gegebenenfalls durch die bei der (Trioxan) polymerisation üblichen Regler d) auf die angestrebten Werte eingestellt werden. Als Regler kommen Acetale bzw. Formale einwertiger Alkohole, die Alkohole selbst sowie die als Kettenüberträger fungierenden geringen Mengen Wasser, deren Anwesenheit sich in der Regel nie vollständig vermeiden lässt, in Frage. Die Regler werden in Mengen von 10 bis 10.000 ppm, vorzugsweise von 100 bis 1.000 ppm, eingesetzt.

Als Initiatoren b) (auch als Katalysatoren bezeichnet) wird bei der erfindungsgemäßen (Trioxan)polymerisation mindestens eine ionische Flüssigkeit der folgenden Formeln verwendet oder deren Mischungen:

| | |
|---|---|
| 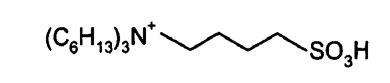 | CF₃SO₃- |
| 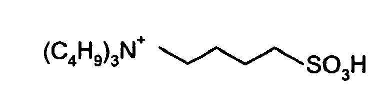 | CF₃SO₃- |
| 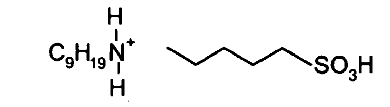 | CF₃SO₃- |
| 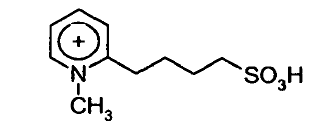 | CF₃SO₃- |
| 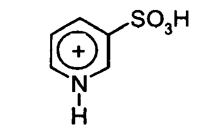 | CF₃SO₃- |
| 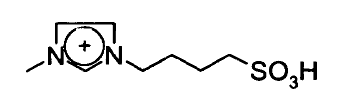 | CF₃SO₃- |

Die Katalysatoren (Initiatoren) werden in Mengen von etwa 0,01 bis 10.000 ppm, vorzugsweise 0,01 bis 500 ppm und insbesondere von 0,01 bis 200 ppm eingesetzt. Im Allgemeinen empfiehlt es sich, den Katalysator in verdünnter Form zuzusetzen, vorzugsweise in Konzentrationen von 0,005 bis 5 Gew.-%. Als Lösungsmittel hierfür können inerte Verbindungen wie aliphatische, cycloaliphatische Kohlenwasserstoffe z.B. Cyclohexan, halogenierte aliphatische Kohlenwasserstoffe, Glykolether usw. verwendet werden. Auch andere ionische Flüssigkeiten mit geringer Acidität können als Lösungsmittel verwendet werden. Besonders bevorzugt ist jedoch eine lösungsmittelfreie Dosierung.

Monomere a), Initiatoren b) und gegebenenfalls Regler c) können auf beliebige Weise vorgemischt oder auch getrennt voneinander dem Polymerisationsreaktor zugegeben werden. Ferner können die Komponenten a), b) und/oder c) zur Stabilisierung sterische gehinderte Phenole enthalten wie in EP-A 129369 oder EP-A 128 739 beschrieben.

Für eine größere Flexibilität beim gewünschten M_{w} des POM-Polymerisates hat es sich als vorteilhaft erwiesen den Regler c) in geringen Mengen Lösungsmittel zu lösen und anschließend mit den Monomeren bzw. Comonomeren zu mischen und zu dosieren.

In einer besonders bevorzugten Ausführungsform wird die Polymerisation als Fällungspolymerisation (je nach Grad der Löslichkeit der einzelnen Komponenten auch als Suspensionspolymerisation bezeichenbar) in einem Lösungsmittel durchgeführt, in welchem das entstehende Polyoxymethylenhomo- oder -copolymerisat weitestgehend unlöslich ist. Unter "weitestgehend" unlöslich soll verstanden werden, dass ab einem Polymerisationsgrad von mindestens 4 das Polymerisat ausfällt.

Als Lösungsmittel werden insbesondere inerte Verbindungen eingesetzt, beispielsweise aliphatische Kohlenwasserstoffe wie Propan, Butan, Pentan, Iso-Octan, n-Hexane, n-Heptan, n-Octan, iso-Octan sowie cycloaliphatische Kohlenwasserstoffe wie Cyclohexan oder Cycloheptan sowie Cyclopentan, welche gegebenenfalls Heteroatome als Substituenten tragen können.

Als aromatische Kohlenwasserstoffe sind solche geeignet welche mindestens 6 bis 30 C-Atome aufweisen, wobei Nitrobenzol, Toluol, Benzol bevorzugt sind.

Als weitere geeignete halogenierte Kohlenwasserstoffe seien Dichlormethan, Chloroform, Dichlorethan und Trichlorethan genannt.

Ferner sind Ether wie Dioxan oder THF sowie Triglym (Triethylenglykoldimethylether) als inerte Lösungsmittel geeignet.

Das Lösungsmittel weist bevorzugt zu Beginn der Reaktion (Zudosierung) Temperaturen von 50 bis 250°C vorzugsweise 55 bis 180 und insbesondere 60 bis 130°C auf. Die Zudosierung des Cokatalysators c) erfolgt bevorzugt nach Zugabe der Monomeren a) , oder vor Zugabe des Katalysators b).

Vorzugsweise wird vor Beginn der Reaktion unter Inertgasbedingungen, bevorzugt unter N₂, gearbeitet, bei Drücken von 1 bis 5, vorzugsweise von 1 bis 2 bar abs.

Vorzugsweise besitzen die ionischen Flüssigkeiten einen Schmelzpunkt von weniger als 180°C. Weiterhin bevorzugt liegt der Schmelzpunkt in einem Bereich von -50°C bis 150°C, mehr bevorzugt im Bereich von -20°C bis 120°C und weiterhin mehr bevorzugt unter 100°C.

In der erfindungsgemäßen Ausführungsform werden ionische Flüssigkeiten eingesetzt, welche als Substituenten eine SO₃H-Säuregruppe enthalten:

| | |
|---|---|
| 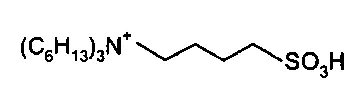 | CF₃SO₃- |
| 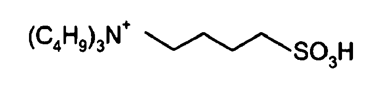 | CF₃SO₃- |
| 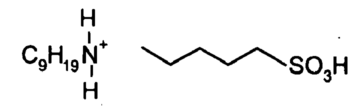 | CF₃SO₃- |
| 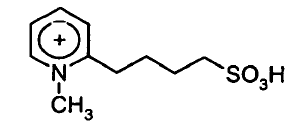 | CF₃SO₃- |
| 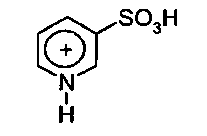 | CF₃SO₃- |
| 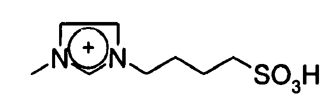 | CF₃SO₃- |

Es können auch Mischungen verschiedener ionischer Flüssigkeiten in Kombination eingesetzt werden, wobei das Mischungsverhältnis beliebig ist.

Die Verweilzeit für die Polymerisation im Lösungsmittel (Fällungspolymerisation) beträgt vorzugsweise 0,1 bis 240 min, insbesondere 5 bis 120 min. Die Polymerisation wird vorzugsweise bis zu einem Umsatz von mindestens 30 %, insbesondere mehr als 60 % geführt. Unter günstigen Bedingungen lassen sich auch Umsätze von 90 % und darüber erzielen, quantitative Umsätze bis zu 100 % sind gut reproduzierbar.

Vorzugsweise wird direkt anschließend an die Polymerisation die Polymerisationsmischung desaktiviert, vorzugsweise ohne dass eine Phasenveränderung erfolgt.

Die Desaktivierung d) der Katalysatorreste erfolgt in der Regel durch Zugabe von mindestens einem Desaktivator d):
a) durch direkte Zugabe in die Polymerisationsvorrichtung, vorzugsweise Extruder, Kneter, Rohrreaktor oder Kessel(kaskade), zum ausgefällten POM (in Teilchenform), oder
b) nach vollständiger Abtrennung des POM-Polymeren vom Lösungsmittel und anschließender Begasung mit gasförmigen Desaktivatoren, oder
c) nach teilweiser Abtrennung des Lösungsmittels und Zugabe des Desaktivators in das verbleibende Lösungsmittel, welches das ausgefällte Polymer enthält, oder
d) nach vollständiger Abtrennung des Polymeren vom Lösungsmittel und Auflösen des Polymeren in einem geeigneten Lösungsmittel sowie Zugabe des Desaktivators zum gelösten Polymeren.

Geeignete Desaktivatoren sind z.B. Ammoniak, aliphatische und aromatische Amine, basisch reagierende Salze, wie Soda und Borax. Diese werden üblicherweise den Polymeren in Mengen von vorzugsweise bis zu 1 Gew.-% zugesetzt.

Zu den organischen Verbindungen der (Erd-)Alkalimetalle, vorzugsweise des Natriums gehören die entsprechenden Salze von (cyclo)aliphatischen, araliphatischen oder aromatischen Carbonsäuren mit vorzugsweise bis zu 30 C-Atomen und vorzugsweise 1 bis 4 Carboxylgruppen. Beispiele hierfür sind: Alkalimetallsalze der Ameisensäure, Essigsäure, Propionsäure, Buttersäure, Isobuttersäure, Caprylsäure, Stearinsäure, Cyclohexancarbonsäure, Bernsteinsäure, Adipinsäure, Korksäure, 1,10-Decandicarbon-säure, 1,4-Cyclohexandicarbonsäure, Terephthalsäure, 1,2,3-Propantricarbonsäure, 1,3,5-Cyclohexantricarbonsäure, Trimellithsäure, 1,2,3,4-Cyclopentantetracarbonsäure, Pyromellithsäure, Benzoesäure, substituierten Benzoesäuren, Dimersäure und Trimersäure sowie neutrale und teilneutrate Montanwachssalze oder Montanwachsestersalze (Montanate). Auch Salze mit andersgearteten Säureresten, wie z.B. Alkali-Paraffin-, Alkali-Olefin- und Alkali-Arylsulfonate oder auch Phenolate sowie Alkoholate, wie z.B. Methanolate, Ethanolate, Glykolate, können erfindungs-gemäß eingesetzt werden.

Bevorzugt werden Natriumsalze von Mono-und Polycarbonsäuren, insbesondere die aliphatischer Mono- und Polycarbonsäuren, vorzugsweise solchen mit 2 bis 18 C-Atomen, insbesondere mit 2 bis 6 C-Atomen und bis zu vier, vorzugsweise bis zu zwei Carboxylgruppen, sowie Natriumalkoholate mit vorzugsweise 2 bis 15, insbesondere 2 bis 8 C-Atomen verwendet. Beispiele besonders bevorzugter Vertreter sind Natriumacetat, Natriumpropionat, Natriumbutyrat, Natriumoxalat, Natriuimmalonat, Natriumsuccinat, Natriummethanolat, Natriumethanolat, Natirumglykonat. Ganz besonders bevorzugt ist Natriummethanolat, welches besonders vorteilhaft in einer Menge von 1-5 fach äquimolar zur eingesetzten Komponente b) eingesetzt wird. Es können auch Gemische verschiedener (Erd-)Alkalimetall-Verbindungen eingesetzt werden.

Weiterhin sind Erdalkalialkyle als Desaktivatoren d) bevorzugt, welche 2 bis 30 C-Atome im Alkylrest aufweisen. Als besonders bevorzugte Metalle seien Li, Mg und Na genannt, wobei n-Butyllithium insbesondere bevorzugt ist.

Bei der bevorzugten Schmelzepolymerisation erfolgt in der Regel die Zugabe des Desaktivators
a) durch Zugabe der reinen Substanz oder einer Lösung oder Suspension in die Reaktionsschmelze,
b) durch Zugabe der Substanz, vorzugsweise per Seitenextruder oder Stopfschnecke in die Reaktionsschmelze.

Bevorzugt verwendet man als Desaktivatoren (d) basische Verbindungen mit mindestens 2 Aminofunktionen unterschiedlicher Reaktivität in einem Molekül.

Unter unterschiedlicher Reaktivität im Sinne der Erfindung versteht man eine unterschiedliche Basizität der Stickstoffe und somit unterschiedlicher Affinität zum kationischen Zentrum am Polyacetal. Eine unterschiedliche Basizität ist in der Regel auf eine unterschiedliche molekulare Umgebung zurückzuführen (siehe auch Breitmaier/Jung, Organische Chemie, Thieme Verlag 1978, S. 374 und 375 und Beyer/Walter, Lehrbuch der organischen Chemie, Hirzel Verlag Stuttgart 1998, S. 166).

Entsprechend können Kombinationen von einer primären und einer sekundären oder primären und tertiären oder sekundären und tertiären Aminofunktionen oder deren Mischungen eingesetzt werden. Erfindungsgemäß sollen diese unterschiedlichen Aminofunktionen in einem Molekül vorhanden sein, wobei das Molgewicht vorzugsweise ≤ 400, insbesondere ≤ 200 gl mol beträgt.

Bevorzugte Verbindungen d) sind solche der allgemeinen Formel I 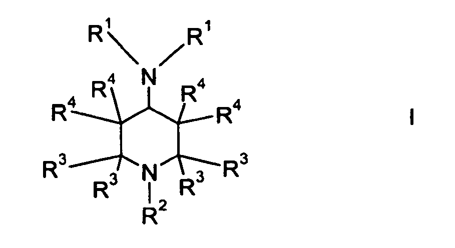 wobei R¹, R³, R⁴ und R5 unabhängig voneinander Wasserstoff oder eine C₁-C₁₀-Alkylgruppe und
R² Wasserstoff oder eine C₁-C₁₀-Alkylgruppe oder O-R⁵ bedeutet.

Bevorzugte Reste R¹ bis R⁵ sind unabhängig voneinander Wasserstoff oder eine C₁-C₄-Alkylgruppe, wie Methyl, Ethyl, n-Propyl, i-Propyl, n-Butyl, i-Butyl, s-Butyl, t-Butyl.

Insbesondere bevorzugte Desaktivatoren d) sind substituierte N-haltige Heterozyklen, insbesondere Derivate des Piperidins, wobei Triacetondiamin (4-Amino-2,2,6,6-Tetramethylpiperidin) besonders bevorzugt ist.

Die Menge beträgt vorzugsweise von 0,001 bis 500 Gew.-ppm, vorzugsweise von 0,05 bis 100 und insbesondere von 0,5 bis 10 Gew.-ppm bezogen auf die Gesamtmasse. Das Verhältnis d) zu Initiator b) beträgt vorzugsweise 0,1 : 1 bis 50 : 1, insbesondere 0,5 : 1 bis 15 : 1 und ganz besonders 1 : 1 bis 10 : 1; bezogen auf die Stoffmenge des Initiators.

Die Desaktivatoren d) können auch mit bekannten anderen Abbruchmitteln gemischt werden.

Anschließend kann das entstandene Polymerisat mit inerten Lösungsmittel beispielsweise Aceton oder Cyclohexan gewaschen werden und mit geeigneten Vorrichtungen von Lösungsmittel abgetrennt, gegebenenfalls gekühlt werden.

Durch die erfindungsgemäße Fahrweise erhält man ein kompaktes, pulverförmiges Granulat, wobei die Entstehung von Grobanteilen gemäß des Standes der Technik vermieden wird.

Bei der Schmelzepolymerisation wird ein Polymer mit insbesondere verbesserter Stabilität erhalten.

Gemäß der erfindungsgemäßen Fahrweise erhält man Polyoxymethylenhomo- oder copolymerisate, wobei die Ketten 0,001 bis 30, vorzugsweise 0,01 bis 10 und insbesondere 0,1 bis 2 und ganz besonders bevorzugt 0,1 bis 1 % Einheiten aufweisen, welche sich von den ionischen Flüssigkeiten b) ableiten.

Bevorzugt befinden sich derartige Einheiten an den Polymerkettenenden. Anschließend kann das entsprechende Polyoxymethylenpolymerisat mit üblichen Additiven wie Stabilisatoren, Kautschuken, Füllstoffen usw. in üblicher Weise weiterverarbeitet werden.

### Beispiele

### Beispiel 1

50 g 1,3,5-Trioxan wurden in einem Glasreaktor bei 80°C konstant gerührt und Initiator I zugegeben (6000 ppm). Es wurde Polyoxymethylenhomopolymer in einer Ausbeute von 88 % erhalten.

| | | |
|---|---|---|
| (I): | 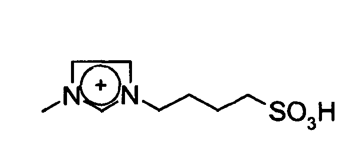 | CF₃SO₃- |

### Beispiel 2

Wie Beispiel 1, jedoch mit 500 ppm (I). Die Ausbeute POM betrug 93 %.

### Beispiel 3

Wie Beispiel 1, jedoch mit 48,65 g 1,3,5-Trioxane und 1,35 g 1,3-Dioxepane. Die Ausbeute POM betrug 90 % mit M_{w} 91.000 g/mol, Mₙ 30.000 g/mol. M_{w}/Mₙ = 3

### Vergleichsbeispiel 1

Wie Beispiel 3, jedoch mit 2 ppm HClO₄ in Triglyme. Ausbeute: 83 %, M_{w} 60.000 g/mol, Mₙ 19.800 g/mol. M_{w}/Mₙ = 3

### Vergleichsbeispiel 2

Wie Vergleichsbeispiel 1, jedoch mit 0,2 ppm HClO₄ in Triglyme. Ausbeute: 90 %, M_{w} 154.000 g/mol, Mn 19.700 g/mol. M_{w}/Mₙ = 7,8.

## Patentansprüche

1. Verfahren zur Herstellung von Polyoxymethylenen durch Polymerisation der Monomeren a) in Gegenwart kationisch wirkender Initiatoren b) sowie gegebenenfalls in Gegenwart von Reglern c) und anschließender Desaktivierung d) sowie Austragung aus dem Reaktor, **dadurch gekennzeichnet, dass** man als Initiator b) mindestens eine ionische Flüssigkeit der folgenden Formeln einsetzt oder deren Mischungen:
| | |
|---|---|
| 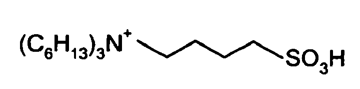 | CF₃SO₃- |
| 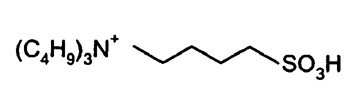 | CF₃SO₃- |
| 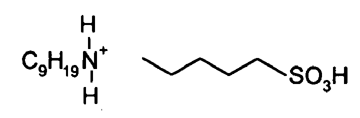 | CF₃SO₃- |
| 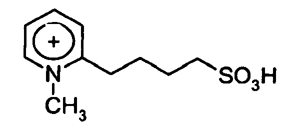 | CF₃SO₃- |
| 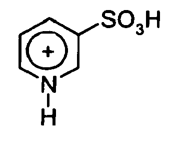 | CF₃SO₃- |
| 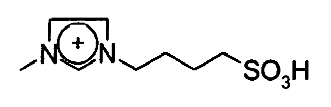 | CF₃SO₃- |

2. Verfahren nach Anspruch 1, **dadurch gekennzeichnet, dass** man den Initiator in Mengen von 0,01 bis 10.000 ppm einsetzt.

3. Verfahren nach den Ansprüchen 1 oder 2, **dadurch gekennzeichnet, dass** man die Polymerisation bei Temperaturen von 50 bis 205°C durchführt.

## Claims

1. A process for preparing polyoxymethylenes by polymerization of the monomers a) in the presence of cationically active initiators b) and, if appropriate, in the presence of regulators c) and subsequent deactivation d) and discharge from the reactor, wherein at least one ionic liquid of the following formulae
| | |
|---|---|
| 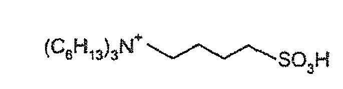 | CF₃SO₃- |
| 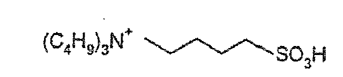 | CF₃SO₃- |
| 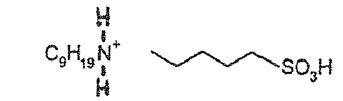 | CF₃SO₃- |
| 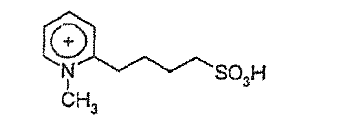 | CF₃SO₃- |
| 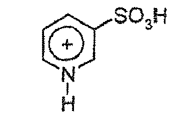 | CF₃SO₃- |
| 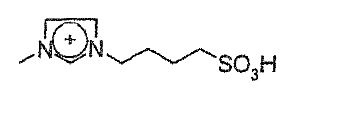 | CF₃SO₃- |
or mixtures thereof are used as initiator b).

2. The process according to claim 1, wherein the initiator is used in amounts of from 0.01 to 10 000 ppm,

3. The process according to claim 1 or 2, wherein the polymerization is carried out at temperatures of from 50 to 205°C.

## Revendications

1. Procédé pour la préparation de polyoxyméthylènes par polymérisation des monomères a) en présence d'initiateurs à effet cationique b) ainsi que le cas échéant en présence d'agents de régulation c) et désactivation consécutive d) ainsi qu'évacuation du réacteur, **caractérisé en ce qu'**on utilise comme initiateur b) au moins un liquide ionique présentant les formules suivantes, ou des mélanges de ceux-ci :
| | |
|---|---|
| 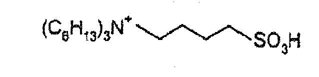 | CF₃SO₃- |
| 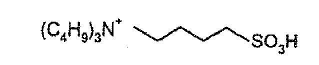 | CF₃SO₃- |
| 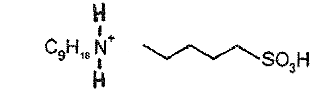 | CF₃SO₃- |
| 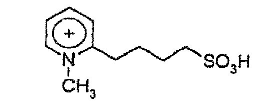 | CF₃SO₃- |
| 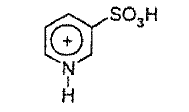 | CF₃SO₃- |
| 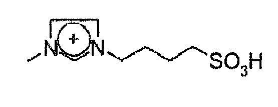 | CF₃SO₃- |

2. Procédé selon la revendication 1, **caractérisé en ce qu'**on utilise l'initiateur en des quantités de 0,01 à 10 000 ppm.

3. Procédé selon les revendications 1 ou 2, **caractérisé en ce qu'**on réalise la polymérisation à des températures de 50 à 205°C.
